# EUROPÄISCHE PATENTSCHRIFT

(11) **EP 1 999 831 B1**
(45) Veröffentlichungstag und Bekanntmachung des Hinweises auf die Patenterteilung: **25.06.2014**
(21) Anmeldenummer: 07726921.5
(22) Anmeldetag: 15.03.2007
(51) Int. Cl.: H02B 13/00

(54) **SAMMELSCHIENENKUPPLUNG**
BUS TIE
ACCOUPLEMENT DES BARRES COLLECTRICES

(30) Priorität: 29.03.2006 DE 102006015310
(43) Veröffentlichungstag der Anmeldung: 10.12.2008
(73) Patentinhaber: Siemens Aktiengesellschaft, 80333 München (DE)
(72) Erfinder: ALBERT, Clemens, 63773 Goldbach (DE); ERMELER, Kristian, 60320 Frankfurt am Main (DE); HORZ, Christof, 56414 Salz (DE)
(86) Internationale Anmeldenummer: PCT/EP2007/052430
(87) Internationale Veröffentlichungsnummer: WO 2007/113088

(56) Entgegenhaltungen:
- DE-A1- 4 312 261
- DE-C1- 19 653 676

## Beschreibung

Die Erfindung betrifft eine Sammelschienenkupplung für Schaltanlagen zum Verbinden zweier Schalterfelder mit einer Isolieranordnung, die jeweils eine Kontaktanordnung und eine mit der Kontaktanordnung verbundene Feldsteuereinrichtung enthält.

Eine derartige Sammelschienenkupplung ist aus der DE 101 19 183 C1 bekannt. Die dort offenbarte Sammelschienenkupplung ist zum elektrischen Verbinden von zwei Schalterfeldern vorgesehen und weist eine Isolieranordnung aus zwei Buchsenelementen und einem Isolierelement auf, zwischen denen eine Feldsteuervorrichtung angeordnet ist; die Isolieranordnung enthält eine Kontaktanordnung. Bei dieser Sammelschienenkupplung ist eine Feldsteuervorrichtung in Form eines kautschukartig elastisch verformbaren Feldsteuerelementes vorgesehen, welches sich axial über die gesamte Länge eines Verbindungselements der Kontaktanordnung erstreckt. Durch dieses Feldsteuerelement sind mögliche Lufteinschlüsse im Inneren der Sammelschienenkupplung abgesteuert, indem das Feldsteuerelement mit den Kontaktelementen elektrisch verbunden ist.

Aus der DE 43 12 261 A1 ist ebenfalls eine solche Sammelschienenkupplung bekannt, die eine Isolieranordnung aus zwei Buchsenelementen und einem Isolierelement aufweist. Das dort offenbarte Isolierelement umfasst ein elektrisch leitendes Material an dem Isolierelement zur Feldsteuerung im Isolierkörper.

Aus der DE 196 15 553 A1 ist weiterhin eine Sammelschienenkupplung bekannt, die eine Isolieranordnung aus zwei Buchsenelementen und einem Isolierelement aufweist, wobei das Isolierelement mit einer Metallisierung zur Feldsteuerung versehen ist.

Aufgabe der vorliegenden Erfindung ist es, eine Sammelschienenkupplung der eingangs erwähnten Art auszubilden, welche kostengünstig herstellbar ist und eine einfache Montage ermöglicht.

Erfindungsgemäß gelöst wird diese Aufgabe dadurch, dass die Isolieranordnung der Sammelschienenkupplung aus zwei Isolierkörpern besteht, wobei für jedes Schalterfeld ein einziger separater Isolierkörper mit eingebetteter Feldsteuervorrichtung vorgesehen ist und die Feldsteuervorrichtung in jedem separaten Isolierkörper mindestens eine die Kontaktanordnung umgebende und mit dieser elektrisch verbundene, zylindrische Steuerelektrode enthält.

Mit einer derartigen Isolieranordnung ist die Montage der erfindungsgemäßen Sammelschienenkupplung wesentlich vereinfacht, weil die Steuerelektroden der Feldsteuervorrichtung in den Isolierkörpern eingebettet sind, so dass ein aufwendiges und präzises Positionieren der Feldsteuervorrichtung bei der Montage der Sammelschienenkupplung entfällt, wobei die in den Isolierkörpern angeordneten Steuerelektroden eine ausreichende Feldabsteuerung innerhalb der Isolierkörper gewährleisten und dadurch Teilentladungen im Inneren wirksam verhindern. Außerdem ist die erfindungsgemäße Sammelschienenkupplung vergleichsweise kostengünstig herstellbar, weil sie zur Herstellung ihrer Isolieranordnung nur Isolierkörper gleicher Ausbildung benötigt.

In weiterer Ausgestaltung der Erfindung weist die Feldsteuervorrichtung eine die zylindrische Steuerelektrode umgebende erdseitige Gegenelektrode auf. Mit einer solchen Gegenelektrode ist eine Feldabsteuerung innerhalb des Isolierkörpers in vorteilhafter Weise ermöglicht.

In einer bevorzugten Ausführungsform ist die Gegenelektrode aus dem Isolierkörper herausgeführt und läuft in einem Befestigungsflansch aus. Durch die Befestigungsflansche ist eine Erdung der Gegenelektroden durch die Befestigung an Gehäuseteilen der Schaltanlage in einfacher Weise möglich.

In zweckmäßiger Weiterbildung ist in den separaten Isolierkörpern jeweils ein Kontaktelemente der Kontaktanordnung eingebettet, mit dem die jeweilige Steuerelektrode elektrisch leitend verbunden ist. Bei derartiger Anordnung wird in einfacher Weise eine Potentialanbindung der Steuerelektroden an das Hochspannungspotential der Kontaktelemente ausgebildet und eine Feldabsteuerung im Isolierkörper ermöglicht.

In weiterer Ausgestaltung sind die Steuerelektroden an ihren der jeweiligen Gegenelektrode zugewandten Enden torusartig ausgebildet. Durch eine torusartige Ausbildung ist die Feldabsteuerung besonders vorteilhaft, weil Bereiche mit Ecken oder Kanten mit hoher Feldstärke vermieden sind

In einer anderen bevorzugten Ausgestaltung ragt die Steuerelektrode in einen zur Aufnahme eines Verbindungselementes der Kontaktanordnung vorgesehenen Freiraum im Innern der Isolieranordnung soweit hinein, dass eine Kontaktgabe mit dem Verbindungselement erfolgt. Dadurch ist ebenfalls in einfacher Weise bei der Montage der Sammelschienenkupplung eine Potentialverbindung der Steuerelektroden mit den potentialführenden Teilen der Sammelschienenkupplung ausgebildet, wobei die ringförmige Steuerelektrode über ausreichende Feldsteuerungseigenschaften zur Feldabsteuerung im Inneren der Isolierkörper verfügt.

In einer zweckmäßigen Ausgestaltung ist zwischen den Isolierkörpern eine Dichtung vorgesehen. Mittels einer derartigen Dichtung, beispielsweise in Form eines Ohrringes oder einer Dichtlippe, wird in einfacher Weise der Innenraum der Sammelschienenkupplung vor Umwelteinflüssen geschützt.

Die Erfindung wird im Folgenden anhand der Zeichnung und eines Ausführungsbeispiels mit Bezug auf die beiliegenden Figuren näher erläutert.

Es zeigen:
- Figur 1: ein Ausführungsbeispiel der erfindungsgemäßen Sammelschienenkupplung in einer ersten Ausführungsform;
- Figur 2: ein weiteres Ausführungsbeispiel der erfindungsgemäßen Sammelschienenkupplung; und
- Figur 3: eine perspektivische Teilansicht einer erfindungsgemäßen Sammelschienenkupplung.

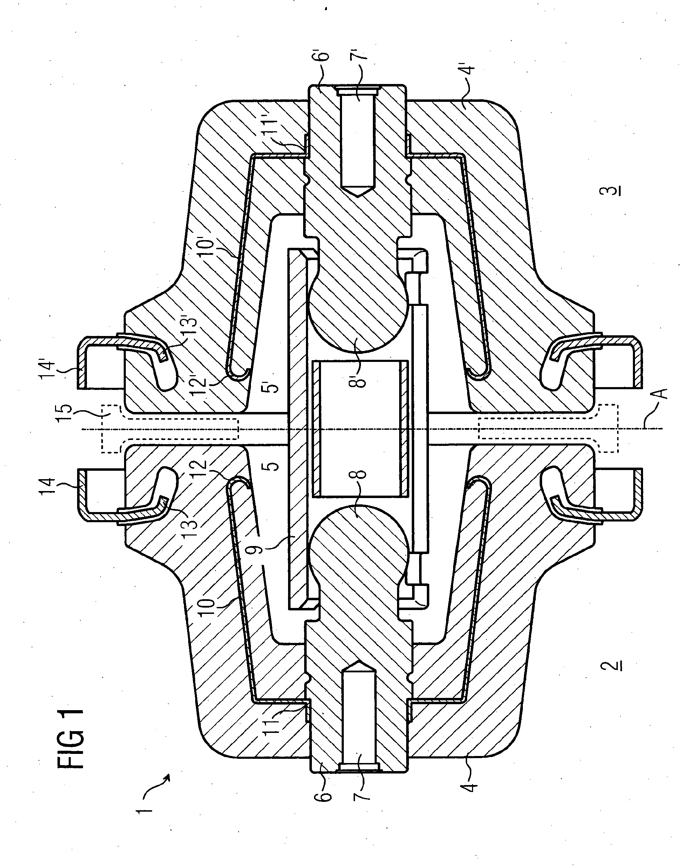

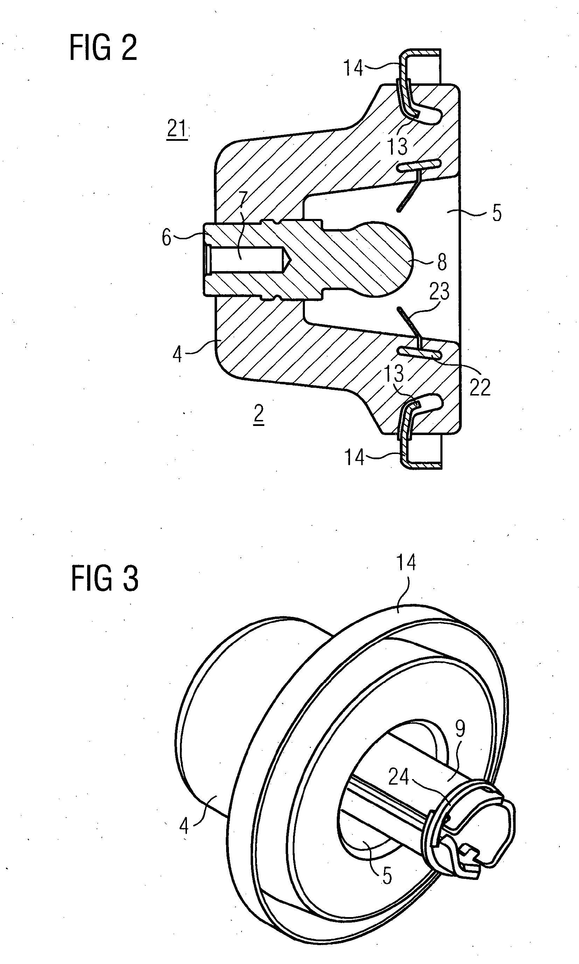

Figur 1 zeigt eine Sammelschienenkupplung 1 zum elektrischen Verbinden von zwei Schalterfeldern 2, 3 einer Schaltanlage, beispielsweise einer gasisolierten Schaltanlage. Die Sammelschienenkupplung 1 ist dabei bezüglich ihrer Mittenachse A symmetrisch, wobei dem Schalterfeld 3 zugeordnete Teil der Sammelschienenkupplung 1, welche den dem Schalterfeld 2 zugeordneten Teilen entsprechen, mit gleichen Bezugszeichen mit Apostroph bezeichnet sind. Die Sammelschienenkupplung 1 umfasst eine Isolieranordnung 4, 4' mit Isolierkörpern 4, 4', welche aus Giesharz gegossen sind und einen Freiraum 5 bzw. 5' aufweisen. Die Freiräume 5 bzw. 5' der Isolierkörper 4 bzw. 4' weisen dabei einen konusartigen Verlauf auf. Durch den jeweiligen Isolierkörper 4 bzw. 4' hindurch erstrecken sich Kontaktelemente 6 bzw. 6', welche an einem Ende jeweils eine Anschlussbohrung mit Innengewinde 7 bzw. 7' aufweisen zum Anschluss an figürlich nicht dargestellte Leitungen der Schalterfelder 2 bzw. 3. An dem den Anschlussbohrungen gegenüberliegenden Ende 8 bzw. 8' sind die Kontaktelemente 6, 6' kugelartig ausgebildet. Ein aus einem elektrisch leitenden Material ausgebildetes Verbindungsteil 9 umschließt die kugelartigen Enden 8, 8' der Kontaktelemente 7, 7' und bildet somit eine leitende Verbindung zwischen den Kontaktelementen 7 und 7' aus. Das Verbindungsteil 9 wird mit Bezug auf die Figur 3 näher erläutert. In die Isolierkörper 4 bzw. 4' eingebettet sind Steuerelektroden 10, 10', welche an einem Ende mittels Verbindungsstegen 11 bzw. 11' mit dem jeweiligen Kontaktelement 6 bzw. 6' leitend verbunden sind und an ihrem anderen Ende 12 bzw. 12' torusartig in Richtung des Freiraumes 5 bzw. 5' gewölbt sind. In den Isolierkörpern 4 bzw. 4' sind Gegenelektroden 13, 13' eingegossen, welche als Flansche 14, 14' aus den Isolierkörpern 4, 4' herausgeführt sind. Die Flansche 14, 14' werden an figürlich nicht dargestellten Gehäusewänden der Schalterfelder 2 bzw. 3 befestigt, beispielsweise durch eine figürlich nicht dargestellte Schraubverbindung oder durch Verschweißen. Die Flansche 14, 14' liegen dabei auf Erdpotential. Die Steuerelektroden 12 bzw. 12' erstrecken sich vom Bereich der Anschlussbohrung 7 bzw. 7' der Kontaktelemente 6, 6' in axialer Richtung über den Verbindungsbereich zwischen dem Verbindungsteil 9 und den Kontaktelementen 6, 6' hinweg bis in den Bereich der Gegenelektroden 13, 13'. Diese Anordnung der Steuerelektroden 12 bzw. 12', welche über die Verbindungen 11 bzw. 11' auf dem Potential der stromführenden Kontaktteile 6 bzw. 6' liegen, führt zu einer ausreichenden Feldabsteuerung im Inneren der Isolierkörper 4, 4' und damit zur Vermeidung von Teilentladungsvorgängen in den Freiräumen 5 bzw. 5'. Zur Abdichtung der Sammelschienenkupplung gegenüber äußeren Umwelteinflüssen ist eine Dichtung 15 in Form eines Ohrrings oder einer Dichtlippe vorgesehen und gestrichelt in der Figur 1 dargestellt.

Figur 2 zeigt ein weiteres Ausführungsbeispiel einer erfindungsgemäßen Sammelschienenkupplung 21, wobei in der Figur 2 nur ein Isolierkörper 4 der Sammelschienenkupplung 21 dargestellt ist. Im Unterschied zu der Sammelschienenkupplung 1 der Figur 1 ist bei der Sammelschienenkupplung 21 eine ringartige Steuerelektrode 22 vorgesehen, welche in den Isolierkörper 4 eingegossen ist und welche einen Anschlussbereich 23 aufweist, welcher sich aus dem Isolierkörper 4 in den Freiraum 5 des Isolierkörpers 4 hinein erstreckt, und zwar dergestalt, dass bei der Montage der Sammelschienenkupplung 21 ein Anbringen des in der Figur 2 figürlich nicht dargestellten Verbindungsteiles 9 eine leitende Verbindung zwischen dem Verbindungsteil 9 und dem Anschlussbereich 23 ausgebildet ist, so dass über diese leitende Verbindung die Steuerelektrode 22 auf dem Potential der Kontaktelemente 6 liegt. Auch mit einer derartigen Steuerelektrode ist eine ausreichende Feldabsteuerung des im Isolierkörper gewährleistet.

Figur 3 zeigt eine perspektivische Darstellung eines Isolierkörpers 4 der Sammelschienenkupplung mit dem Flansch 14 und dem Freiraum 5, wobei das Verbindungsteil 9 auf dem nicht sichtbaren kugelartigen Ende 8 des ebenfalls nicht sichtbaren Kontaktelemtes 6 montiert ist. Das Verbindungsteil 9 besteht aus mehreren Verbindungssegmenten, welche gelenkig miteinander verbunden sein können oder mittels Federringen 24 in ihrer kreisartigen Ausrichtung zueinander gehalten werden. Durch die Anordnung der Segmente des Verbindungsteiles 9 wird wie in der Figur 1 dargestellt eine leitende Verbindung zwischen dem kugelartigen Ende 8 bzw. 8' der Kontaktelemente 6 bzw. 6' mit dem Verbindungsteil 9 ausgebildet, so dass bei vollständig montierter Sammelschienenkupplung eine leitende Verbindung zwischen den Kontaktteilen 6 und 6' ausgebildet ist und über die Anschlussbohrungen 7 bzw. 7' somit eine leitende Verbindung zwischen Sammelschienen der Schalterfelder 2 und 3 ausgebildet ist.

### Bezugszeichenliste

- 1,21: Sammelschienenkupplung
- 2, 3: Schalterfelder
- 4, 4': Isolierkörper
- 5, 5': Freiräume
- 6, 6': Kontaktteile
- 7, 7': Anschlussbohrung mit Innengewinde
- 8, 8': kugelartiges Ende
- 9: Verbindungsteil
- 10, 10': Steuerelektroden
- 11, 11': Verbindungen
- 12, 12': Ende der Steuerelektroden
- 13, 13': Gegenelektroden
- 14, 14': Flansche
- 15: Dichtung
- 22: Steuerelektrode
- 23: Anschlussbereich
- 24: Federring

## Patentansprüche

1. Sammelschienenkupplung (1) für Schaltanlagen zum Verbinden zweier Schalterfelder (2, 3) mit einer Isolieranordnung (4, 4'), die jeweils eine Kontaktanordnung (6, 6', 9) und eine mit der Kontaktanordnung (6, 6', 9) verbundene Feldsteuervorrichtung (10, 10', 13, 13', 22) enthält,
**dadurch gekennzeichnet, dass** die Isolieranordnung (4, 4') der Sammelschienenkupplung aus zwei Isolierkörpern (4, 4') besteht, wobei für jedes Schalterfeld (2, 3) ein einziger separater Isolierkörper (4, 4') mit eingebetteter Feldsteuervorrichtung (10, 10', 13, 13', 22) vorgesehen ist und die Feldsteuervorrichtung (10, 10', 13, 13', 22) in jedem separaten Isolierkörper (4, 4') mindestens eine die Kontaktanordnung (6, 6', 9) umgebende und mit dieser elektrisch verbundene, zylindrische Steuerelektrode (10, 10', 22) enthält.

2. Sammelschienenkupplung nach Anspruch 1,
**dadurch gekennzeichnet, dass** die Feldsteuervorrichtung (10, 10', 13, 13', 22) eine die zylindrische Steuerelektrode (10, 10', 22) umgebende erdseitige Gegenelektrode (13, 13') aufweist.

3. Sammelschienenkupplung nach Anspruch 2,
**dadurch gekennzeichnet, dass** die Gegenelektrode (13, 13') aus dem Isolierkörper (4, 4') herausgeführt ist und in einem Befestigungsflansch (14, 14') ausläuft.

4. Sammelschienenkupplung nach einem der vorangehenden Ansprüche,
**dadurch gekennzeichnet, dass** in den separaten Isolierkörpern (4, 4') jeweils ein Kontakt-Patentansprüche
element (6, 6') der Kontaktanordnung (6, 6', 9) eingebettet ist, mit dem die jeweilige Steuerelektrode (10, 10') elektrisch leitend verbunden ist.

5. Sammelschienenkupplung nach einem der Ansprüche 2 bis 4,
**dadurch gekennzeichnet, dass** die Steuerelektroden (10, 10') an ihren der jeweiligen Gegenelektrode (13, 13') zugewandten Enden torusartig ausgebildet sind.

6. Sammelschienenkupplung nach einem der Ansprüche 1 bis 3,
**dadurch gekennzeichnet, dass** die Steuerelektrode (22) in einen zur Aufnahme eines Verbindungselementes (9) der Kontaktanordnung (6, 6', 9) vorgesehenen Freiraum (5, 5') im Innern der Isolieranordnung (4, 4') soweit hineinragt, dass eine Kontaktgabe mit dem Verbindungselement (9) erfolgt.

7. Sammelschienenkupplung nach einem der vorangehenden Ansprüche,
**dadurch gekennzeichnet, dass** zwischen den Isolierkörpern (4, 4') eine Dichtung (15) vorgesehen ist.

## Claims

1. Busbar coupling (1) for switchgear assemblies for connection of two switch panels (2, 3), with an isolating arrangement (4, 4') which in each case contains a contact arrangement (6, 6', 9) and a field control apparatus (10, 10', 13, 13', 22) which is connected to the contact arrangement (6, 6', 9),
**characterized in that**
the isolating arrangement (4, 4') of the busbar coupling is composed of two isolating bodies (4, 4'), a single separate isolating body (4, 4') with an embedded field control apparatus (10, 10', 13, 13', 22) being provided for each switch panel (2, 3), and, in each separate isolating body (4, 4'), the field control apparatus (10, 10', 13, 13', 22) contains at least one cylindrical control electrode (10, 10', 22) which surrounds the contact arrangement (6, 6', 9) and is electrically connected to it.

2. Busbar coupling according to Claim 1,
**characterized in that**
the field control apparatus (10, 10', 13, 13', 22) has an opposing electrode (13, 13'), on the ground side, which surrounds the cylindrical control electrode (10, 10', 22).

3. Busbar coupling according to Claim 2,
**characterized in that**
the opposing electrode (13, 13') is passed out of the isolating body (4, 4') and ends in an attachment flange (14, 14').

4. Busbar coupling according to one of the preceding claims, **characterized in that**
a contact element (6, 6') of the contact arrangement (6, 6', 9) is embedded in the respective separate isolating bodies (4, 4'), to which contact element (6, 6') the respective control electrode (10, 10') is electrically conductively connected.

5. Busbar coupling according to one of Claims 2 to 4, **characterized in that**
the control electrodes (10, 10') are toroidal at their ends facing the respective opposing electrode (13, 13').

6. Busbar coupling according to one of Claims 1 to 3, **characterized in that**
the control electrode (22) projects so far into a free space (5, 5') which is intended to hold a connecting element (9) of the contact arrangement (6, 6', 9), in the interior of the isolating arrangement (4, 4') that contact is made with the connecting element (9).

7. Busbar coupling according to one of the preceding claims, **characterized in that**
a seal (15) is provided between the isolating bodies (4, 4').

## Revendications

1. Accouplement (1) de barres collectrices pour des installations de distribution pour relier deux panneaux ( 2, 3 ) de disjoncteur, avec un agencement ( 4, 4' ) isolant, qui comporte respectivement un agencement ( 6, 6', 9 ) de contact et un dispositif ( 10, 10', 13, 13', 22 ) de commande de champ relié à l'agencement ( 6, 6', 9 ) de contact,
**caractérisé en ce que**
l'agencement ( 4, 4' ) isolant de l'accouplement de barres collectrices est constitué de deux corps ( 4, 4' ) isolants, dans lequel, pour chaque panneau ( 2, 3 ) de commutateur, il est prévu un corps ( 4, 4' ) isolant unique, distinct, à dispositif ( 10, 10', 13, 13', 22 ) de commande de champ incorporé et le dispositif ( 10, 10', 13, 13', 22 ) de commande de champ comporte, dans chaque corps ( 4, 4' ) isolant distinct, au moins une électrode ( 10, 10', 22 ) de commande cylindrique, entourant l'agencement ( 6, 6', 9 ) de contact et reliée électriquement à celui-ci.

2. Accouplement de barres collectrices suivant la revendication 1,
**caractérisé en ce que**
le dispositif ( 10, 10', 13, 13', 22 ) de commande de champ a une contre-électrode ( 13, 13' ) du côté de la terre, qui entoure l'électrode ( 10, 10', 22 ) de commande cylindrique.

3. Accouplement de barres collectrices suivant la revendication 2,
**caractérisé en ce que** la contre-électrode ( 13, 13' ) est sortie du corps ( 4, 4' ) isolant et s'étend dans une bride ( 14, 14' ) de fixation.

4. Accouplement de barres collectrices suivant l'une des revendications précédentes,
**caractérisé en ce qu'**un élément ( 6, 6' ) de contact de l'agencement ( 6, 6', 9 ) de contact, avec lequel l'électrode ( 10, 10' ) de commande respective est reliée d'une manière conductrice de l'électricité, est incorporé dans les corps ( 4, 4' ) isolants distincts.

5. Accouplement de barres collectrices suivant l'une des revendications 2 à 4,
**caractérisé en ce que**
les électrodes ( 10, 10' ) de commande sont de type en tore à leurs extrémités tournées vers la contre-électrode ( 13, 13' ) respective.

6. Accouplement de barres collectrices suivant l'une des revendications 1 à 3,
**caractérisé en ce que**
l'électrode ( 22 ) de commande pénètre, dans un espace ( 5, 5' ) libre prévu pour le logement d'un élément (9) de liaison de l'agencement ( 6, 6', 9 ) de contact, à l'intérieur de l'agencement ( 4, 4' ) isolant, jusqu'à ce que s'effectue un contact avec l'élément ( 9 ) de liaison.

7. Accouplement de barres collectrices suivant l'une des revendications précédentes,
**caractérisé en ce qu'**une étanchéité ( 15 ) est prévue entre les corps ( 4, 4' ) isolants.
